(19) Europäisches Patentamt
European Patent Office
Office européen des brevets

(11) EP 4 333 125 B1

(12) **EUROPEAN PATENT SPECIFICATION**

(45) Date of publication and mention of the grant of the patent:
**22.04.2026 Bulletin 2026/17**

(21) Application number: **22795551.5**

(22) Date of filing: **07.04.2022**

(51) International Patent Classification (IPC):
***H01M 4/62*** (2006.01) ***H01B 1/08*** (2006.01)
***H01B 1/22*** (2006.01) ***H01M 10/052*** (2010.01)
***H01M 10/056*** (2010.01) ***H01M 10/0562*** (2010.01)
***H01M 10/0568*** (2010.01)

(52) Cooperative Patent Classification (CPC):
**H01M 10/052; H01B 1/08; H01M 4/62; H01M 10/056; H01M 10/0562; H01M 10/0565; H01M 10/0568;** H01M 2300/0068; H01M 2300/0071; H01M 2300/0091; Y02E 60/10

(86) International application number:
**PCT/JP2022/017305**

(87) International publication number:
**WO 2022/230635 (03.11.2022 Gazette 2022/44)**

(54) **SOLID ELECTROLYTE, ELECTROLYTE COMPOSITION, ELECTROLYTE SHEET AND POWER STORAGE DEVICE**

FESTELEKTROLYT, ELEKTROLYTZUSAMMENSETZUNG, ELEKTROLYTFOLIE UND STROMSPEICHERVORRICHTUNG

ÉLECTROLYTE SOLIDE, COMPOSITION D’ÉLECTROLYTE, FEUILLE D’ÉLECTROLYTE ET DISPOSITIF DE STOCKAGE D’ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**30.04.2021 JP 2021077359**
**30.04.2021 JP 2021077363**
**30.04.2021 JP 2021077374**
**30.04.2021 JP 2021077400**
**30.04.2021 JP 2021077418**

(43) Date of publication of application:
**06.03.2024 Bulletin 2024/10**

(73) Proprietor: **Niterra Co., Ltd.**
**Nagoya-shi, Aichi 461-0005 (JP)**

(72) Inventors:
- **NOHARA, Naoya**
**Nagoya-shi, Aichi 467-8525 (JP)**
- **YONEKURA, Hiroshi**
**Nagoya-shi, Aichi 467-8525 (JP)**
- **MATSUURA, Hiroyuki**
**Nagoya-shi, Aichi 467-8525 (JP)**
- **YAMAMOTO, Hiroshi**
**Nagoya-shi, Aichi 467-8525 (JP)**
- **UEKI, Masatoshi**
**Nagoya-shi, Aichi 467-8525 (JP)**
- **KONDO, Ayako**
**Nagoya-shi, Aichi 467-8525 (JP)**

(74) Representative: **Grünecker Patent- und Rechtsanwälte PartG mbB**
**Leopoldstraße 4**
**80802 München (DE)**

(56) References cited:
**JP-A- 2016 035 913** **JP-A- 2016 035 913**
**JP-A- 2018 056 427** **JP-A- 2018 056 427**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 333 125 B1

## Description

TECHNICAL FIELD

The present invention relates to an electrolyte composition, to an electrolyte sheet, and to a power storage device.

BACKGROUND ART

Hitherto, solid electrolytes having a garnet-type crystal structure (hereinafter referred to simply as a "garnet-type structure") which contains Li, La, Zr, and O have been known (Patent Literature 1).
JP2016035913A and JP2018056427A also relate to electrolyte compositions.

CITATION LIST

PATENT LITERATURE

Patent Literature 1: JP6682709B

SUMMARY OF INVENTION

TECHNICAL PROBLEM

In the related art, when a solid electrolytes having a garnet-type structure which contains Li, La, Zr, and O is mixed with an organic compound, in some cases, the electrolyte becomes a gel (or is unfluidized) through reaction of the organic compound with the solid electrolyte. In such a gel state, uniform dispersion of the solid electrolyte fails to be achieved.
The present invention has been conceived so as to solve the problem, and an object of the invention is to provide a solid electrolyte, an electrolyte composition, an electrolyte sheet, and a power storage device, in which gelling is suppressed.

SOLUTION TO PROBLEM

The present invention is concerned with an electrolyte composition according to claim 1. A preferred embodiment is defined in claim 2. Further, the present invention is concerned with an electrolyte sheet defined in claim 3 and a power storage device defined in claim 4.

ADVANTAGEOUS EFFECTS OF INVENTION

The solid electrolyte of the present invention has lower basicity. Thus, interaction between the solid electrolyte and an organic compound is weakened, to thereby suppress gelling of the electrolyte. According to the electrolyte composition, the electrolyte sheet, and the power storage device, each containing the solid electrolyte, unevenness in the dispersion state of the solid electrolyte can be reduced.

BRIEF DESCRIPTION OF DRAWINGS

[FIG. 1] Cross-sectional view of a power storage device of an embodiment.
[FIG. 2] A cross-section of a solid electrolyte particle.
[FIG. 3] A schematic view of a mixture.
[FIG. 4] An example of a cumulative distribution of oxide particles.
[FIG. 5] An X-ray diffraction pattern of an oxide.
[FIG. 6] A diffraction line observed in a 2θ range of 37.5° to 38.5°.

DESCRIPTION OF EMBODIMENTS

Hereinafter, a preferred embodiment of the present invention will be described with reference to attached drawings. FIG. 1 is a schematic cross-section of a power storage device 10 of one embodiment. The power storage device

10 of this embodiment corresponds to a secondary battery formed of a solid battery in which power generating elements are formed of a solid material. The expression "a power generating element is formed of a solid material" refers to a case in which a main body of the power generating element is formed of a solid material, and does not exclude an embodiment in which the main body has been impregnated with liquid.

As shown in FIG. 1, the power storage device 10 includes, from top to bottom, a positive electrode layer 11, an electrolyte layer 14, and a negative electrode layer 15. The positive electrode layer 11, the electrolyte layer 14, and the negative electrode layer 15 are built in a case (not illustrated).

The positive electrode layer 11 includes a composite layer 13 and a current-collecting layer 12 stacked thereon. The current-collecting layer 12 is a member having an electrical conductivity. Examples of the material of the current-collecting layer 12 include metals selected from among Ni, Ti, Fe, and Al; alloys each containing two or more of such metals; stainless steel; and carbon material.

The composite layer 13 is formed of a positive electrode mixture. The positive electrode mixture is composed of an electrolyte composition, an active material 19, and an optional conducting aid. The electrolyte composition contains a solid electrolyte 18, a polymer, and an electrolytic solution. For lowering the electrical resistance of the composite layer 13, the positive electrode mixture for forming the composite layer 13 may contain a conducting aid. Examples of the conducting aid include carbon black, acetylene black, Ketjen black, carbon fiber, Ni, Pt, and Ag.

Examples of the active material 19 include a metal oxide in which the metal includes a transition metal, a sulfur-containing active material, and an organic active material. Examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_4$, and $LiFePO_4$.

In order to suppress reaction between the active material 19 and the solid electrolyte 18, a coating layer may be provided on the active material 19. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radiarene compounds; tetracyanoxydimethane; and phenadine oxide.

The negative electrode layer 15 includes a composite layer 17 and a current-collecting layer 16 stacked thereon. The current-collecting layer 16 is a member having an electrical conductivity. Examples of the material of the current-collecting layer 16 include metals selected from among Ni, Ti, Fe, Cu, and Si; alloys each containing two or more of such metals; stainless steel; and carbon material.

The composite layer 17 is formed of a negative electrode mixture. The negative electrode mixture is composed of an electrolyte composition, an active material 20, and an optional conducting aid. The electrolyte composition contains a solid electrolyte 18, a polymer, and an electrolytic solution. For lowering the electrical resistance of the composite layer 17, the negative electrode mixture for forming the composite layer 17 may contain a conducting aid. Examples of the conducting aid include carbon black, acetylene black, Ketjen black, carbon fiber, Ni, Pt, and Ag. Examples of the active material 20 include Li, Li-Al alloy, $Li_4Ti_5O_{12}$, graphite, In, Si, Si-Li alloy, and SiO.

The electrolyte layer 14 is formed of an electrolyte composition. The electrolyte composition contains the solid electrolyte 18, a polymer, and an electrolytic solution. The solid electrolyte 18 is an oxide having lithium ion conductivity attributed to a garnet-type structure which contains Li, La, Zr, and O. The standard composition of the garnet-type structure oxide is $Li_5La_3M_2O_{12}$ (M=Nb, Ta). Examples the solid electrolyte 18 include $Li_7La_3Zr_2O_{12}$, corresponding to the standard composition in which the hexavalent cation M is substituted by a tetravalent cation.

In addition to Li, La, and Zr, the solid electrolyte 18 further contains at least one element selected from the group consisting of Mg, Al, Si, Ca, Ti, V, Ga, Sr, Y, Nb, Sn, Sb, Ba, Hf, Ta, W, Bi, Rb, and lanthanoid (except for La). Examples of such an electrolyte include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

The solid electrolyte 18 has a crystal structure, for example, a cubic system (space group: Ia-3d ("-" is an over-line representing rotary inversion), JCPDS:84-1753). Particularly, the solid electrolyte 18 preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte 18 preferably contains both Mg and element A, and satisfies all the following conditions (4) to (6) regarding mole proportions of the elements. From the viewpoint of elevating the ion conductivity of the solid electrolyte 18, element A is preferably Sr.

$$(1)\ 1.33 \leq Li/(La+A) \leq 3$$

$$(2)\ 0 \le Mg/(La+A) \le 0.5$$

$$(3)\ 0 \le A/(La+A) \le 0.67$$

$$(4)\ 2.0 \le Li/(La+A) \le 2.5$$

$$(5)\ 0.01 \le Mg/(La+A) \le 0.14$$

$$(6)\ 0.04 \le A/(La+A) \le 0.17$$

FIG. 2 is a cross-section of a particle 21 of the solid electrolyte 18. In the solid electrolyte 18, the particle 21 is a particle having a particle size equal to or greater than the particle size at which the cumulative value of frequency in a volume-based particle size distribution of the solid electrolyte 18 reaches 10%. Hereinafter, the particle size is referred to as "$D_{10}$." In this embodiment, $D_{10}$ is determined in the following manner. Specifically, a cut surface of the electrolyte layer 14 is provided (through polishing, irradiating with a focused ion beam (FIB), or ion milling). An image of the solid electrolyte 18 observed under a scanning electron microscope (SEM) is analyzed. Based on the area (in the specification, the area means a cross-sectional area) of any particle of the solid electrolyte 18, the circle equivalent diameter of the particle is calculated. Thus, a volume-based particle size distribution is obtained. $D_{10}$ is a circle equivalent diameter at which the cumulative value of frequency in a volume-based particle size distribution reaches 10% (minus sieve). For securing accuracy, the image for providing the particle size distribution must have an area of 400 $\mu m^2$ or wider in the cross-section of the electrolyte layer 14.

Subsequently, among the particles of the solid electrolyte 18 developed to the cross-section where particle size distribution measurement has been performed, the number average of the degrees of envelope of the particles 21 having a particle size equal to or greater than $D_{10}$ is counted. The degree of envelope is defined as "area within a contour 22 of a particle 21/area within an envelope of the particle 21." The area within an envelope is an area of a cross-section of a particle inside the envelope 23 which is in contact with the contour 22. The number average of the degrees of envelope is defined as a value obtained by dividing the sum of the degree of envelope values of the particles 21 by the number of the particles 21 involved in determination of degree of envelope values.

The reasons for excluding particles having a particle size smaller than $D_{10}$ in calculation of the degree of envelope are as follows. Firstly, erroneous detection of particles of a substance other than the solid electrolyte 18, which would otherwise be caused by a problematic resolution of the image, is prevented in image recognition. Secondly, when a particle is cut at its end portion, the apparent diameter of the particle observed in the cross-section may be smaller than the actual particle size. When the apparent diameter of a particle is smaller, the degree of envelope of the particle approaches 1. Thus, particles having a particle size smaller than $D_{10}$ are excluded in calculation of the degree of envelope, whereby the accuracy of calculation is ensured.

The degree of envelope of the particle 21 is an index for the roughness of the contour 22. When the degree of envelope approaches 1, the contour 22 of the particle 21 is smoother. The degree of envelope may be calculated by, for example, image processing software "image J." The degree of envelope of the particle 21 correlates with the basicity of the solid electrolyte 18. Specifically, when the number average of the degrees of envelope of the particles 21 is 0.8 or greater, the basicity of the solid electrolyte 18 is weaker.

The degree of envelope can be determined from the cross-section of the electrolyte layer 14 or the composite layer 13 or 17. However, alternatively, the degree of envelope can also be determined by sparsely placing a powder of the solid electrolyte 18 so as to ensure spatial intervals of the particles (i.e., to avoid overlapping of the particles), and analyzing the projection images of the particles. In the case where the degree of envelope is determined from a projection image of the solid electrolyte 18 (powder), particles of the number equal to or more than the number of particles which can observed in a sectional area of 400 $\mu m^2$ of the electrolyte layer 14 are subjected to image analysis. Alternatively, the solid electrolyte 18 (powder) is solidified by, for example, mixing the powder with a binder and forming into a sheet, or embedding the powder in synthetic resin. Then, a cut surface of the thus-obtained solid is provided (through polishing, irradiating with a focused ion beam (FIB), or ion milling), to thereby analyze the observed image of the solid electrolyte 18, to thereby determine the degree of envelope.

FIG. 3 is a schematic view of a mixture 24 containing the solid electrolyte 18. The mixture 24 is composed of N-methylpyrrolidone (N-methyl-2-pyrrolidone) and the solid electrolyte 18. The mixture 24 is prepared such that the ratio by mass of the solid electrolyte 18 to the mixture 24 at 25°C is adjusted to 24.5 wt%. The solid electrolyte 18 contained in the mixture 24 is selected at random from, for example, the electrolyte layer 14.

Generally, the solid electrolyte of a garnet-type structure which contains Li, La, Zr, and O is strongly basic. In the

case where a strongly basic solid electrolyte is immersed in N-methylpyrrolidone at a concentration of 24.5 wt%; the resultant mixture is stirred and then allowed to stand for 12 hours; and the obtained supernatant is 10-fold diluted with pure water, the hydrogen ion exponent of the liquid is a pH of 10 or higher at 25°C. The hydrogen ion exponent is a value measured by use of a pH-testing paper (UNIV(1-11), product of ADVANTEC TOYO KAISHA, Ltd.).

In contrast, regarding the solid electrolyte 18, in the case where a mixture 24 containing the solid electrolyte 18 is stirred; the resultant mixture 24 is then allowed to stand for 12 hours; and the obtained supernatant 25 is 10-fold diluted with pure water, the hydrogen ion exponent of the liquid is a pH of 7 to 8 at 25°C. Thus, the basicity of the solid electrolyte 18 is weakened.

Also, the solid electrolyte 18 (oxide) is a powder which has a particle size at which the cumulative value of frequency in a volume-based particle size distribution reaches 10% of 1.4 μm or greater. Hereinafter the particle size is referred to as "$D_{10}$." The volume-based particle size distribution of the oxide is determined by means of a laser diffraction/scattering particle size distribution analyzing apparatus (e.g., Mictrotrack MT3300EX II). The sample for use in determination of the particle size distribution is, for example, an oxide as recovered from the electrolyte layer 14. A sample which has been prepared by adding an appropriate amount of the oxide to a solvent (0.2 wt% aqueous sodium hexametaphosphate) has been added is subjected to dispersion treatment for 3 minutes by means of an ultrasonic dispersion apparatus (e.g., SD-600, product of Nissei Corporation), and the resultant sample is set into a measurement apparatus. In calculation of particle size distribution, the refractive index of the sample is adjusted to 1.81, and that of the solvent is adjusted to 1.33.

FIG. 4 is an exemplary cumulative distribution profile (minus sieve) of an oxide whose cumulative value of frequency in a volume-based particle size distribution. FIG. 4 shows a distribution profile in which the ratio of the particles having a particle size smaller than the particle size $D_{10}$ of 10%. The solid electrolyte 18 (oxide) having a garnet-type structure which contains Li, La, and Zr is a strongly basic. Particularly, oxide particles having a small particle size and a large specific surface area has poor chemical stability with a strong basicity. When the relative amount of the particles having a small particle size relatively decreases, the chemical stability of the oxide increases, and the basicity decreases. When $D_{10}$ of the oxide is 1.4 μm or more, the tendency becomes more significant.

The thickness of the electrolyte layer 14 containing the oxide is predetermined to a value, for example, that of three times or more of the particle size at which the cumulative value of frequency in a volume-based particle size distribution is 100% (hereinafter the diameter is referred to as "$D_{100}$"), for the purpose of preventing short-circuit between electrodes. Thus, $D_{10}$ of the oxide is preferably smaller than 5 μm. When $D_{10}$ of the oxide is in excess of 5 μm, $D_{100}$ increases. In this case, the thickness of the electrolyte layer 14 must be tuned to a sufficient thickness. As the thickness of the electrolyte layer 14 increases, the amount of the active material 19 in a unit volume of the power storage device 10 decreases, whereby the discharge capacity of the power storage device 10 decreases. In order to ensure the discharge capacity of the power storage device 10, $D_{10}$ of the oxide is preferably smaller than 5 μm.

Also, the solid electrolyte 18 (oxide) is a powder having a specific surface area of 1.4 $m^2$/g or less, as determined through a gas adsorption method. The specific surface area of the oxide is determined in accordance with JIS Z8830:2013 (ISO9277:2010). In one specific procedure, the specific surface area is determined through the BET method by means of a full-automated specific surface area measurement apparatus (Macsorb HM-1208). A sample involved in the specific surface area measurement is, for example, an oxide as taken from the electrolyte layer 14. Before conducting specific surface area measurement, the sample is subjected to a degassing treatment in an inert gas (e.g., He) atmosphere at 200°C for 60 minutes, to thereby remove substances physically adsorbed on the surface of the oxide sample. The gas adsorbed by the sample in the specific surface area measurement is a gas mixture (He:$N_2$=7:3), and the amount of the gas adsorbed is measured through the fluid process. The temperature at measurement is an ambient temperature (15 to 25°C). A parameter is calculated through the one point method.

Although the solid electrolyte 18 (oxide) having a garnet-type structure which contains Li, La, and Zr is strongly basic, when the specific surface area thereof decreases, chemical stability of the oxide particles increases. As a result, the basicity of the oxide is weakened. The tendency is particularly remarkable in the case of such an oxide having a specific surface area 1.4 $m^2$/g or less.

FIG. 5 is an exemplary diffraction pattern of the solid electrolyte 18 (oxide) obtained by means of a powder X-ray diffractometer (not illustrated). The powder X-ray diffractometer includes as an X-ray source, an optical system, a goniometer, and a detector. A diffraction line 26 is obtained under the following conditions. X-ray: CuKα ray from which Kβ ray is filtered by a Kβ filter, acceleration voltage in X-ray source (i.e., tube voltage): 50 kV, discharge current in X-ray source (tube current): 300 mA, optical system: parallel method, goniometer: horizontal, scanning axis: θ-2θ type, detector: scintillation counter, divergence slit: 1.0 mm, divergence lateral limiting slit: 10 mm, scattering slit: open, reception slit: open, continuous scanning rate: 0.3 to 0.7°/min, and sampling width: 0.02°.

The oxide particle sample to be subjected to X-ray diffraction is pulverized to an appropriate particle size so that the sample can be fixed in a sample holder without assuming a specific orientation state. The particle size of the sample and scanning rate are tuned so that the diffraction peak of the highest intensity has a count value of 2,000 to 8,000. As shown in FIG. 5, the diffraction line 26 shows that the oxide has a crystal structure of a cubic system (space group: Ia-3d ("-"

is an over-line representing rotary inversion), JCPDS:84-1753).

FIG. 6 shows the diffraction line 26 observed in a 20 range of 37.5° to 38.5°. The oxide exhibits a half-value width 31smaller than 0.30°, the half-value width belonging to the diffraction line 26 observed in the above range. The half-value width 31 is defined as a length of a segment of a straight line which passes through a midpoint of a perpendicular line 30 drawn from the top 28 of the diffraction peak 27 to a base line 29 and which is parallel to the base line 29, the segment being provided by cutting the straight line by the diffraction peak 27. The base line 26 is a segment ligating the point on the diffraction line 29 at a 2θ of 37.5° to the point on the diffraction line 26 at a 2θ of 38.5°.

One oxide particle is formed of a plurality of crystallites. As used herein, the term "crystallite" refers to a largest mass which can be regarded as a single crystal. When the size of a crystallite increases, the number of crystallites contained in one particle decreases, and the number of diffraction gratings present in one crystallite increases. Thus, the half-value width 31 decreases. When the half-value width 31 is measured from a diffraction peak 22 in a high-angle region (2θ: ≥30°), the error in detection of the value of diffraction grating decreases. As a result, the precision of the value of the half-value width 31 can be enhanced.

Although the solid electrolyte 18 (oxide) having a garnet-type structure which contains Li, La, and Zr is strongly basic, when the number of diffraction gratings present in one oxide crystallite increases, chemical stability of the oxide particles increases, and the basicity is weakened. The tendency is particularly remarkable when the oxide has a half width 31 less than 0.30°, in which case the half-value width 31 of the diffraction line 26 emerges in a 2θ range of 37.5° to 38.5°.

Next, an example of the method for producing the solid electrolyte 18 will be described. One exemplary method for producing the solid electrolyte 18 includes a mixing step of mixing raw materials to provide a material mixture, a firing step of firing the material mixture, and a heat treatment step of heating the yielded powder for synthesis (hereinafter may be referred to as a "synthesis powder").

In the mixing step, raw materials containing the elements forming the solid electrolyte 18 are mixed together, to thereby provide a material mixture. Examples of the raw material include oxides, composite oxides, hydroxides, carbonate salts, chlorides, sulfate salts, nitrate salts, and phosphate salts, each containing elements, for example, Li, La, Zr, Mg, and A (A: at least one element selected from the group consisting of Ca, Sr, and Ba). These raw materials are pulverized and mixed, to thereby yield a material mixture.

Between the mixing step and the firing step, a calcination step of calcining the material mixture preferably intervenes. In one mode of the calcination step, the material mixture is fired at 900 to 1,100°C for 2 to 15 hours, to thereby yield a calcined material. By conducting the calcination step, formation of a garnet-type crystal structure can be facilitated after the firing step.

Between the calcination step and the firing step, a step of pulverizing and mixing the calcined material preferably intervenes. In that step, the calcined material is pulverized with mixing, to thereby yield a mixed material. Through the step of pulverizing and mixing the calcined material, formation of a uniform crystalline phase can be facilitated after the firing step. Alternatively, a mixture of the calcined material and a binder may be subjected to pulverization and mixing. Examples of the binder include methylcellulose, ethylcellulose, polyvinyl alcohol, and polyvinyl butyral.

In the firing step, the material mixture, the calcined material, or the mixed material is molded into a compact, and the compact is fired under conditions of, for example, 1,000 to 1,250°C for 3 to 36 hours, to thereby yield a sintered body. The sintered body is pulverized in an inert gas atmosphere, to thereby provide a synthesis powder (i.e., powder for synthesis).

In the heat treatment step, the synthesis powder is fed to a furnace where a gas flows in and out, and heated in an atmosphere where gas flow is provided around the synthesis powder. When the synthesis powder reacts with $CO_2$ in air, $Li_2CO_3$ coating is formed on the surface of the synthesis powder. Through the heat treatment, $CO_2$ is released, and the structure of the synthesis powder is modified, to thereby form the solid electrolyte 18. In one heat treatment procedure, the heat treatment includes maintaining the powder at 640°C or higher for 10 hours or longer, and maintaining the powder at 670°C or higher and 2 hours or longer.

The gas is at least one species selected from among an inert gas and oxygen gas. No particular limitation is imposed on the inert gas, so long as it does not chemically react with the synthesis powder. Examples of the inert gas include nitrogen, helium, neon, argon, krypton, xenon, and radon. Particularly, at least one species selected from nitrogen, helium, and argon is preferred.

Feeding in and out of the gas may be carried out in a continuous or intermittent manner. The flow rate of the gas fed in a continuous or intermittent manner and the period of intermittently feeding the gas is appropriately set in accordance with the volume of the furnace, the mass of the synthesis powder, and other factors. The $CO_2$ concentration of the gas fed to the furnace, which depends on the temperature of the heat treatment, is preferably a concentration lower than the $CO_2$ concentration of air (380 ppm), for example, 100 ppm (by volume) or less. The dew point of the gas fed to the furnace is preferably -40°C or lower, particularly preferably - 50°C or lower, from the viewpoint of promoting release of $CO_2$ from the synthesis powder. After completion of the heat treatment, the solid electrolyte 18 is immediately mixed with an organic compound or the like and then formed into a sheet, whereby the composite layers 13, 17 and the electrolyte layer 14 are obtained.

The particles contained in the solid electrolyte 18 observed in the cross-section of the electrolyte layer 14 preferably has a circle equivalent diameter (i.e., a median diameter, hereinafter referred to as "$D_{50}$") of 4 to 10 μm, more preferably 4 to 6 μm, since the surface area of the solid electrolyte 18 is adjusted to an appropriate value, and the mobility of lithium ions between the electrolytic solution and the solid electrolyte 18 present on the surface of the solid electrolyte 18 is ensured.

In determination of $D_{50}$ of the solid electrolyte 18, firstly a cut surface of the electrolyte layer 14 is provided (through polishing, irradiating with FIB, or ion milling). An image of the solid electrolyte 18 observed under a scanning electron microscope (SEM) is analyzed. Based on the area of any particle of the solid electrolyte 18, the circle equivalent diameter of the particle is calculated. Thus, a volume-based particle size distribution is obtained. $D_{50}$ is a circle equivalent diameter at which the cumulative value of frequency in a volume-based particle size distribution reaches 50%. For securing accuracy, the image for providing the particle size distribution must have an area of 400 $\mu m^2$ or wider in the cross-section of the electrolyte layer 14.

The electrolytic solution contained in the electrolyte layer 14 contains an ionic liquid in which an electrolyte salt is dissolved. The ionic liquid is a compound formed of a cation and an anion, and assumes liquid at ambient temperature and atmospheric pressure. When the ionic liquid forms the electrolytic solution, inflammability of the electrolytic solution can be enhanced. Various properties and functions of the electrolytic solution are determined by the type and salt concentration of the electrolyte salt and the ionic liquid.

The electrolyte salt is a compound for use in donation and acceptance of cations between the positive electrode layer 11 and the negative electrode layer 15. The electrolyte salt is, for example, a lithium salt. Examples of the anion of the electrolyte salt include halide ions (e.g., $I^-$, $Cl^-$,and $Br^-$), $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (R represents a C1 to C4 alkyl group, a phenyl group, or a naphthyl group).

The anion of the electrolyte salt is preferably a sulfonylimido moiety having a sulfonyl group $-S(=O)_2-$; such as $N(SO_2F)_2^-$, $N(SO_2CF_3)_2^-$, or $N(SO_2C_2F_5)_2^-$ for an advantageous property of the sulfonylimide anion. Specifically, even when the salt concentration increases, a rise in viscosity of the electrolytic solution and a drop in ion conductivity are suppressed. Further, a solid electrolyte interphase (SEI) film, which has high stability and low resistivity, is formed, whereby reductive decomposition of the electrolytic solution is suppressed, and the potential window on the reduction side can be expanded. In some cases, $N(SO_2F)_2^-$ may be referred to as bis(fluorosulfonyl)imide anion (abbreviated as [FSI]-), and $N(SO_2CF_3)_2^-$ may be referred to as bis(trifluoromethanesulfonyl)imide anion (abbreviated as [TFSI]-).

The ionic liquid preferably includes an imidazolium as a cationic moiety. An example of the imidazolium cation is a compound represented by formula (1).

[F1]

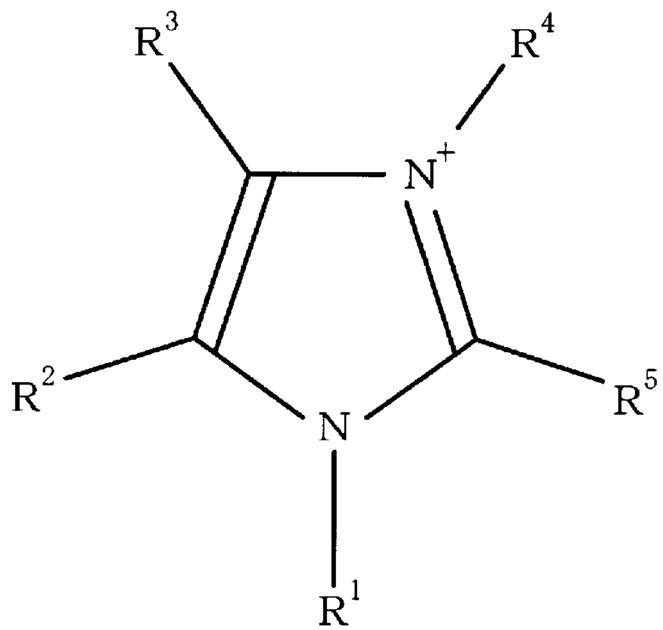

(1)

In formula (1), each of $R_1$ to $R_5$ represents a hydrogen group or an alkyl group. The alkyl group may have a substituent. The alkyl group (including a substituent) represented by any of $R_1$ to $R_5$ preferably has 1 to 10 carbon atoms,

more preferably 1 to 5 carbon atoms, still more preferably 1 to 4 carbon atoms, from the viewpoint of ensuring ion conductivity in the electrolytic solution.

No particular limitation is imposed on the substituent. Examples of the substituent include an alkyl group, a cycloalkyl group, an aryl group, a hydroxyl group, a carboxyl group, a nitro group, a trifluoromethyl group, an amido group, a carbamoyl group, an ester group, a carbonyloxy group, a cyano group, a halogeno group, an alkoxy group, an aryloxy group, and a sulfonamido group.

The anion moiety of the ionic liquid is preferably a sulfonylimido moiety. Examples of the sulfonylimide anion include $N(SO_2F)_2^-$, $N(SO_2CF_3)_2^-$, $N(SO_2C_2F_5)_2^-$, and $N(SO_2C_4F_9)_2^-$. The anion moiety of the ionic liquid is preferably the same as that of the electrolyte salt, since coordination of the anion to lithium ions contained in the electrolytic solution (i.e., interaction) can be easily controlled.

Examples of the ionic liquid include 1-ethyl-3-methylimidazolium bis(fluorosulfonyl)imide (EMI-FSI) and 1-ethyl-3-methylimidazolium bis(trifluoromethanesulfonyl)imide (EMI-TFSI). An ionic liquid (electrolytic solution) which includes an imidazolium cation and a sulfonylimide anion and in which an electrolyte salt is dissolved is preferred, from the viewpoint of ensuring high ion conductivity.

The polymer contained in the electrolyte layer 14 is, for example, a binder for attaining a bound state of the solid electrolyte 18. The polymer includes a vinylidene fluoride polymer having $-CH_2CF_2-$. The vinylidene fluoride polymer is preferred, for its high mechanical strength. No particular limitation is imposed on the vinylidene fluoride polymer, so long as the polymer has $-CH_2CF_2-$. Examples of the vinylidene fluoride polymer include a vinylidene fluoride homopolymer and a copolymer of vinylidene fluoride and a copolymerizable monomer.

Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene.

The aforementioned copolymer is formed of vinylidene fluoride polymerized with one or more copolymerizable monomers. A vinylidene fluoride-hexafluoropropylene copolymer is particularly preferred, since it can provide a wider potential window.

The polymer may further include an additional polymer other than the vinylidene fluoride polymer. The vinylidene fluoride polymer content of the polymer is, for example, 80 to 100 mass%. Examples of the additional polymer include fluorinated resin (except for vinylidene fluoride polymer), polyolefin, rubber-like polymer such as stryrene-butadiene rubber, polyimide, polyvinylpyrroridone, polyvinyl alcohol, and cellulose ether. Examples of the fluorinated resin include completely fluorinated resin, partially fluorinated resin, and fluorinated resin copolymer. Examples of the completely fluorinated resin include polytetrafluoroethylene. Examples of the partially fluorinated resin include polychlorotrifluoroethylene and poly(vinyl fluoride). Examples of the fluorinated resin copolymer include 4-fluoroethylene-perfluoroalkyl vinyl ether copolymer, 4-fluoroethylene-6-fluoropropylene copolymer, ethylene-4-fluoroethylene copolymer, and ethylene-chlorotrifluoroethylene copolymer.

The electrolyte layer 14 may further contain a solvent for dissolving the polymer. The electrolyte salt can also be dissolved in the solvent. The electrolyte layer 14 is produced by molding, into a sheet, an electrolyte composition containing the solid electrolyte18, the electrolyte salt, the ionic liquid, the polymer, and the solvent. At least a part of the solvent contained in the electrolyte composition is vaporized via drying under reduced pressure or the like, after molding to form a sheet for yielding the electrolyte layer 14. Thus, the solvent is removed at least partially from the electrolyte layer 14. The species and amount of the solvent remaining in the electrolyte layer 14 are determined through gas chromatography-mass spectrometry (GC-MS).

The solvent is preferably an aprotic, polar solvent, more preferably an aprotic and protophobic, polar solvent. Classification of the solvent (e.g., aprotic or protophobic) is conducted in accordance with I.M. Kolthoff, Anal. Chem. 46, 1992 (1974). According to the classification by Kolthoff, solvent is generally categorized into "amphiprotic (i.e., having both acidity and basicity and capable of accepting and releasing proton)" and "aprotic (having no hydrogen atom to form a hydrogen bond)." The latter solvent is precisely divided into "protophilic (strongly basic and readily solvated with cations)" and "protophobic (weakly basic and difficult to solvated with cations). "In aprotic and protophobic, polar solvents, protons and a hydrogen bond are not generally involved in reaction, and the solid electrolyte 18 is readily dispersed.

Among aprotic polar solvents, examples of the protophilic solvent include N,N-dimethylformamide, N,N-dimethylacetamide, hexamethylphosphoric acid triamide, dimethylsulfoxide, N-methyl-2-pyrrolidone, pyridine, dioxane, tetrahydrofuran, and ether. Among aprotic polar solvents, examples of the protophobic solvent include propylene carbonate, dimethyl carbonate, diethyl carbonate, ethyl methyl carbonate, sulfolane, acetonitrile, acetone, isobutyl methyl ketone, nitromethane, methyl ethyl ketone, and tetramethylsilane.

The electrolyte composition contains one or more species of the polar solvent. The water contents of the solvent and ionic liquid are preferably 200 ppm or less, respectively, more preferably 100 ppm or less, particularly preferably 10

ppm or less, form the viewpoint of suppressing reaction of the solid electrolyte 18 with water present in the solvent or ionic liquid.

In the electrolyte composition in which the solid electrolyte 18 intermingles with an organic compound, a conceivable mechanism of forming a gel (being unfluidized) through reaction between the solid electrolyte 18 with the organic compound is as follows. Specifically, a tiny amount of water present in the electrolyte composition reacts with a basic solid electrolyte having a garnet-type structure which contains Li, La, and Zr, to thereby form LiOH and $Li_2O_3$ on the surface of the solid electrolyte. As a result, $OH^-$ in the system increases, whereby basicity increases.

In the case where hydrogen is bonded to a carbon atom at 2-position of the imidazolium cation of the ionic liquid, when proton at 2-position is eliminated by the action of base, the ion conductivity of the electrolytic solution decreases. Proton released from the imidazolium cation reacts with $OH^-$, to thereby generate water. As mentioned above, the thus-generated water reacts with the solid electrolyte, to thereby further strengthen the basicity.

Under basic conditions, the vinylidene fluoride polymer readily forms a polyene structure via elimination of HF. Formation of polyene of the vinylidene fluoride polymer causes the electrolyte composition to become a gel. In addition, an electrochemical reaction caused by the eliminated HF unintentionally forms SEI, whereby the electrical resistance of SEI increases.

In contrast, the solid electrolyte 18 including particles 21 having a number average of the degrees of envelope of 0.8 or more has weaker basicity, whereby the reaction of the solid electrolyte 18 with water present in the electrolyte composition can be suppressed. Since difficulty is encountered in increasing the basicity in the system, release of proton at 2-position of the imidazolium cation is impeded, whereby a drop in ion conductivity of the electrolytic solution which would otherwise be caused by release of proton is suppressed. Also, in the vinylidene fluoride polymer, difficulty is encountered in formation of polyene via release of HF, and gel formation of the electrolyte composition is suppressed. Furthermore, since electrochemical reaction attributed to HF is impeded, the resistance of SEI can be maintained at a low level. Particularly when the solvent contained in the electrolyte composition is an aprotic and protophobic, polar solvent, protons and a hydrogen bond are not generally involved in reaction. Thus, gel formation can be further suppressed.

Meanwhile, the solid electrolyte 18, where a liquid obtained by 10-fold diluting the supernatant 25 of the mixture 24 with pure water has a hydrogen ion exponent (pH) of 8 or lower, is weakly basic. Thus, reaction between the solid electrolyte 18 and water present in the electrolyte composition is suppressed, to thereby also impede gel formation.

The solid electrolyte 18 (oxide) having a $D_{10}$ of 1.4 μm or greater is also weakly basic. Thus, reaction between the solid electrolyte 18 and water present in the electrolyte composition is suppressed, to thereby also impede gel formation.

The solid electrolyte 18 (oxide) having a specific surface area 1.4 $m^2/g$ or less is also weakly basic. Thus, reaction between the solid electrolyte 18 and water present in the electrolyte composition is suppressed, to thereby also impede gel formation.

The solid electrolyte 18 (oxide) exhibiting an X-ray diffraction line 26 observed in a 2θ range of 37.5° to 38.5° and having a half-value width 31 less than 0.30° is also weakly basic. Thus, reaction between the solid electrolyte 18 and water present in the electrolyte composition is suppressed, to thereby also impede gel formation.

In the electrolyte layer 14 (electrolyte composition), the amount (vol. %) of the ionic liquid with respect to the total amount of the solid electrolyte 18 and the ionic liquid is preferably 50 vol% or less (excepting 0 vol%). In other words, the ratio solid electrolyte : ionic liquid is (100-X) : X ($0<X\leq50$). Adjusting the amount of the ionic liquid is based on that combination of the solid electrolyte 18 with the ionic liquid co-present with the solid electrolyte 18 ensures ion conductivity and prevents leakage of the ionic liquid.

The amount of the ionic liquid (vol%) is determined in the following manner. Specifically, the electrolyte layer 14 is frozen or embedded in a 4-function epoxy resin or the like. Then, a vision field (×5,000) is selected at random from a cross-section of the electrolyte layer 14. The vision field is analyzed under an SEM equipped with an energy-dispersive X-ray spectrometer (EDS). In the analysis, the distributional feature of La, Zr, and S is specified, and the contrast of a reflective electron image is analyzed, to thereby determine the areas of the solid electrolyte 18 and the ionic liquid. The ratio of the cross-sectional area of the ionic liquid to the cross-sectional area of the electrolyte layer 14 is considered to be a volume ratio of the ionic liquid to the electrolyte layer 14. Thus, the ionic liquid content (vol%) is determined.

The lithium ion conductivity of the electrolyte composition is determined in accordance with the types of the solid electrolyte 18, the electrolyte salt, and the ionic liquid, the salt concentration, and other factors. The lithium ion conductivity of the electrolyte composition (25°C) is $4.0 \times 10^{-5}$ S/cm or higher, from the viewpoint of ensuring the powder density of a power storage device 10 containing the electrolyte composition.

Since the electrolyte composition contains an anion originating from the electrolytic solution, the lithium ion conductivity of the electrolyte composition is determined through the following procedure. Specifically, a collector is closely attached to each surface of a sheet of an electrolyte composition, to thereby form a symmetric cell. Through the AC impedance method, the entire ion conductivity of the cell is calculated. By multiplying the transport number of lithium ion, lithium ion conductivity is calculated. The transport number of lithium ion is determined through the AC impedance method and the stationary state DC method.

The transport number is calculated through the following procedure. Firstly, the resistance $R_{S0}$ of the cell is

analyzed through measuring AC impedance. AC impedance is measured at 25°C, a voltage of 10 mV, and a frequency of 7 MHz to 100 MHz.

Next, the initial current $I_0$ immediately after application of a constant voltage V to the cell is measured. The initial resistance $R_0$ of the cell is calculated by the following equation A:

$$R_0=V/I_0 \quad \cdots \quad A$$

The initial current is measured at a voltage of 10 mV for a total time of 6 seconds with measurement intervals of 0.0002 seconds.

By inputting the values of the resistance $R_{S0}$ and initial resistance $R_0$ to the following equation B, interfacial resistance $R_{INT}$ is calculated.

$$R_{INT}=R_0 - R_{S0} \quad \cdots \quad B$$

Subsequently, a constant voltage V is applied to the cell to achieve a stationary state. Then, current I is measured, and resistance $R_P$ of the cell at the stationary state is calculated by the following equation C.

$$R_P=V/I \quad \cdots \quad C$$

The current at the stationary state is measured at a voltage of 10 mV for a total time of 10 hours with measurement intervals of 60 seconds.

After establishment of the stationary state of the cell, the resistance $R_S$ of the cell is analyzed through measuring AC impedance under the conditions as described above. By inputting the values of resistances $R_S$ and $R_P$ and interfacial resistance $R_{INT}$ into the following equation D, transport number $t_{Li}$ is calculated.

$$t_{Li}=R_{S/}(R_P - R_{INT}) \quad \cdots \quad D$$

In the electrolyte layer 14 (electrolyte composition), the amount (vol. %) of the binder with respect to the total amount of the solid electrolyte 18 and the ionic liquid is preferably 10 vol% or less (excepting 0 vol%). In other words, the ratio (the sum of the amounts of solid electrolyte and ionic liquid) : (amount of binder) is (100-Y) : Y ($0<Y\leq10$). The presence of the binder ensures formability of the electrolyte layer 14 and reduces a drop in ion conductivity of the electrolyte layer 14. Similar to the above case, the binder content (vol%) is obtained from a percentage area of the cross-section of the electrolyte layer 14 which is determined through SEM-EDS analysis.

The power storage device 10 is fabricated through, for example, the following procedure. Specifically, an ionic liquid in which an electrolyte salt is dissolved is mixed with the solid electrolyte 18. Separately, a polymer is dissolved in a solvent. The two liquids are mixed, to form a slurry. The slurry is formed into a tape, which is then dried to form a green sheet (electrolyte sheet) for providing the electrolyte layer 14.

Separately, an ionic liquid in which an electrolyte salt is dissolved is mixed with the solid electrolyte 18, and an active material 19 is added to the mixture with mixing. Further, a solution in which a polymer is dissolved in solvent is added with mixing, to thereby form a slurry. The slurry is formed into a tape on the current-collecting layer 12 and then dried to form a green sheet (positive electrode sheet, an electrolyte sheet) for providing the positive electrode layer 11.

Yet separately, an ionic liquid in which an electrolyte salt is dissolved is mixed with the solid electrolyte 18, and an active material 20 is added to the mixture with mixing. Further, a solution in which a polymer is dissolved is added with mixing, to thereby form a slurry. The slurry is formed into a tape on the current-collecting layer 16 and then dried to form a green sheet (negative electrode sheet, an electrolyte sheet) for providing the negative electrode layer 15.

The electrolyte sheet, the positive electrode sheet, and the negative electrode sheet are cut into a shape of interest. The cut products thereof are stacked from the positive electrode sheet, the electrolyte sheet, and the negative electrode sheet in that order, and the stacked product is pressed to integrate the sheets. To each of the current-collecting layers 12, 16, a terminal (not illustrated) is connected, and the product is built in a case (not illustrated), and the case is closed. Thus, the power storage device 10 including the positive electrode layer 11, the electrolyte layer 14, and the negative electrode layer 15 in that order can be fabricated.

EXAMPLES

The present invention will next be described in detail by way of examples, which should not be construed as limiting the invention thereto.

(Preparation of solid electrolyte)

$Li_2CO_3$, MgO, $La(OH)_3$, $SrCO_3$, and $ZrO_2$ were weighed so as to establish a formula: $Li_{6.95}Mg_{0.15}La_{2.75}Sr_{0.25}Zr_{2.0}O_{12}$. The amount of $Li_2CO_3$ was adjusted to an about 15 mol%-excess (as reduced to elemental Li), in consideration of sublimation of Li during firing. The thus-weighed raw materials, ethanol, and zirconia balls were fed to a nyoln-made pot, and the mixture was pulverized and mixed by means of a ball mill for 15 hours. The resultant slurry was removed from the pot and dried. The dry product was calcined on an MgO plate (at 900°C for 1 hour). The calcined powder was put into a nylon-made pot with ethanol, and the mixture was pulverized and mixed by means of a ball mill for 15 hours.

The slurry removed from the pot was dried, and the dry product was added to a metal mold (diameter: 12 mm), followed by press forming the dry product, to thereby yield a compact having a thickness of about 1.5 mm. By means of a cold isostatic press (CIP) machine, the compact was pressed at a hydrostatic pressure of 1.5 t/$cm^2$. The compact was covered with a calcined powder having the same chemical composition as that of the compact, and the resultant body was fired in a reducing atmosphere (at 1,100°C for 4 hours), to thereby yield a sintered body of a solid electrolyte. The lithium ion conductivity of the sintered body, as determined through the AC impedance method, was $1.0 \times 10^{-3}$ S/cm. The lithium ion conductivity was measured at 25°C, a voltage of 10 mV, and a frequency of 7 MHz to 100 mHz. The sintered body was pulverized in an Ar atmosphere. The product was caused to pass through a sieve having an opening of 250 $\mu$m, and the powder having passed through the sieve was recovered as a solid electrolyte.

The powder (100 g) having passed through the sieve, balls having a diameter of 4 mm (536 g), and a fluorine-containing inert liquid (250 mL) were put into a pot, and the powder component of the mixture was pulverized by means of a planetary ball mill (rotation speed: 200 rpm) for 6 hours. The resultant slurry removed from the pot was dried, to thereby yield a crude powder of the solid electrolyte.

Another powder (50 g) having passed through the sieve in a similar manner, balls having a diameter of 4 mm (536 g), and a fluorine-containing inert liquid (100 mL) were put into a pot, and the powder component of the mixture was pulverized by means of a planetary ball mill (rotation speed: 300 rpm) for 4 hours. The resultant slurry was removed from the pot and dried, to thereby yield a micropowder of the solid electrolyte.

(Heat treatment of crude powder and micropowder)

The solid electrolyte crude powder (40 g or less) was placed in a tube furnace (capacity: 1,875 $cm^3$) and heated at 670°C for 2 hours, while nitrogen gas was supplied through one end of the tube furnace (flow rate: 10 L/min) and exhausted through the other end of the tube furnace. When the temperature inside the furnace fell to 50°C, the heat-treated crude powder was immediately removed from the furnace and placed in a tightly closable container so as to prevent exposure to the atmosphere. The solid electrolyte micropowder was subjected to the same heat treatment, and placed in a tightly closable container.

(Calculation of degree of envelope)

Each of the heat-treated crude powder, the heat-treated micropowder, and a non-heat-treated crude powder was sparsely adhered and fixed on a carbon tape on which a tacky layer was provided. Thereafter, an SEM image of each powder was taken. Through image analysis, the circle equivalent diameter of each particle was calculated from the projection area, whereby a volume-based particle size distribution was obtained, to thereby calculate $D_{10}$.

Subsequently, the number average of the degrees of envelope of the particles having a particle size equal to or greater than $D_{10}$ in the solid electrolyte which had been subjected to particle size distribution measurement was determined by means of image J 1.52v. The number average of the degrees of envelope of the particles of the heat-treated crude powder (hereinafter referred to as "powder A"), the particles of the heat-treated micropowder (hereinafter referred to as "powder B"), and the particles of the non-heat-treated crude powder (hereinafter referred to as "powder C") were 0.93, 0.80, and 0.75, respectively.

(Determination of hydrogen ion exponent)

Each of powders A to C was immersed in N-methyl-2-pyrrolidone with stirring, to thereby provide a mixture, and the mixture was allowed to stand in a room at 25°C for 12 hours. In each case, the powder content of the mixture was 24.5 wt%. After the treatment, the supernatant of the mixture was 10-fold diluted with pure water, and the hydrogen ion exponent of the liquid was measured by use of a pH-testing paper (UNIV(1-11), product of ADVANTEC TOYO KAISHA, Ltd.). The hydrogen ion exponents of the mixture originating from powders A to C were pH: 7 to 8, pH: 7 to 8, and pH: 10, respectively. The variation in pH (i.e., 7 to 8) of hydrogen ion exponent in the cases of powders A and B is attributed to visual observation to determine the change in color of the pH-testing paper.

(Determination of particle size distribution)

The particle size distribution of each of powders A to C was determined by means of a laser diffraction-scattering particle size distribution measuring apparatus (MT3300EX II, product of MICROTRAC). The sample for particle size distribution measurement was added to a solvent (0.2 wt% aqueous sodium hexametaphosphate) and subjected to dispersion treatment for 3 minutes by means of an ultrasonic dispersing apparatus (SD-600, product of Nippon Seiki Co., Ltd.), and the resultant sample was placed in a measurement apparatus. The diffraction index of the sample was adjusted to 1.81, and that of the solvent was adjusted to 1.33, to thereby calculate $D_{10}$, $D_{50}$, $D_{90}$, and $D_{100}$. The thus-calculated $D_{50}$ and $D_{90}$ correspond to particle sizes at which cumulative values (minus sieve) in the particle size distribution were 50% and 90%, respectively. $D_{10}$ of powders A to C were 3.6 μm, 1.4 μm, and 0.5 μm, respectively.

(Determination of specific surface area)

The specific surface area of each of powders A to C was determined through the BET one-point flow (He:$N_2$=7:3) method by means of a full-automated specific surface area measurement apparatus (HM-1208). Before measurement, each sample whose specific surface area was to be determined was subjected to a degassing treatment in an inert atmosphere at 200°C for 60 minutes. The specific surface areas of powders A to C were 0.4 $m^2$/g, 1.4 $m^2$/g, and 1.6 $m^2$/g, respectively.

(X-ray diffraction)

The diffraction pattern of each of powders A to C was obtained by means of a powder X-ray diffractometer under the following conditions. X-ray: CuKα ray, tube voltage: 50 kV, tube current: 300 mA, optical system: parallel method, goniometer: horizontal, scanning axis: θ-2θ type, detector: scintillation counter, divergence slit: 1.0 mm, divergence lateral limiting slit: 10 mm, scattering slit: open, reception slit: open, continuous scanning rate: 0.3 to 0.7°/min, and sampling width: 0.02°. The scanning rate was tuned to fall within a scanning rate range of 0.3 to 0.7°/min so that the highest intensity diffraction peak was adjusted to a count value of 2,000 to 8,000. In each case, the half-value width of a diffraction line observed in a 2θ range of 37.5° to 38.5° was measured from the obtained diffraction pattern. The half-value widths regarding powders A to C were 0.26°, 0.29°, and 0.31°, respectively.

(Preparation of electrolytic solution)

A lithium salt $LiN(SO_2F)_2$ was added to an ionic liquid, 1-ethyl-3-methylimidazolium bis(fluorosulfonyl)imide (EMI-FSI), so that the lithium salt concentration was adjusted to 3 mol/$dm^3$. Thus, an electrolytic solution was yielded.

(Example 1)

Powder A was mixed with an electrolytic solution in an Ar atmosphere by means of a mortar so that the ratio (solid electrolyte : electrolytic solution) was adjusted to 61:39 (by volume), to thereby provide a compound powder. In an Ar atmosphere, the compound powder (18 g), polyvinylidene fluoride-hexafluoropropylene copolymer (PVDF-HFP) (0.864 g), and dimethyl carbonate (DMC) (7.776 g) were mixed, to thereby prepare a slurry of Example 1.

(Example 2)

The procedure of Example 1 was repeated, except that powder A was changed to powder B, to thereby prepare a slurry of Example 2.

(Comparative Example 1)

The procedure of Example 1 was repeated, except that powder A was changed to powder C, to thereby prepare a slurry of Comparative Example 1.

(Comparative Example 2)

The procedure of Comparative Example 1 was repeated, except that dimethyl carbonate was changed to propylene carbonate (PC), to thereby prepare a slurry of Comparative Example 2.

(Example 3)

Powder A was mixed with an electrolytic solution in an Ar atmosphere by means of a mortar so that the ratio (solid electrolyte : electrolytic solution) was adjusted to 61:39 (by volume), to thereby provide a compound powder. In an Ar atmosphere, the compound powder (18 g), polyvinylidene fluoride (PVDF) (0.864 g), and propylene carbonate (PC) (7.776 g) were mixed, to thereby prepare a slurry of Example 3.

(Example 4)

The procedure of Example 3 was repeated, except that propylene carbonate was changed to dimethyl carbonate (DMC), to thereby prepare a slurry of Example 4.

(Example 5)

The procedure of Example 3 was repeated, except that powder A was changed to powder B, to thereby prepare a slurry of Example 5.

(Example 6)

The procedure of Example 5 was repeated, except that propylene carbonate was changed to dimethyl carbonate, to thereby prepare a slurry of Example 6.

(Comparative Example 3)

The procedure of Example 3 was repeated, except that powder A was changed to powder C, to thereby prepare a slurry of Comparative Example 3.

(Comparative Example 4)

The procedure of Comparative Example 3 was repeated, except that propylene carbonate was changed to dimethyl carbonate, to thereby prepare a slurry of Comparative Example 4.

(Comparative Example 5)

The procedure of Example 3 was repeated, except that propylene carbonate was changed to N-methyl-2-pyrrolidone (NMP), to thereby prepare a slurry of Comparative Example 5.

(Test methods and results)

Each of the slurries prepared in the Examples and Comparative Examples was placed in a beaker and allowed to stand in an Ar atmosphere at 25°C for 12 hours. After passage of 12 hours, whether or not gelling (unfluidization) of the slurry occurred was visually checked. Tables 1 and 2 show the results. The symbol "+" denotes the case of at least partially gelling of the slurry, and the symbol "-" denotes the case of no gelling of the slurry.

[Table 1]

| | Oxide | | Solvent | Gelling of slurry |
|---|---|---|---|---|
| | Degree of envelope | pH | | |
| Ex. 1 | 0.93 | 7 | DMC | - |
| Ex. 2 | 0.80 | 7 | DMC | - |
| Comp. Ex. 1 | 0.75 | 10 | DMC | + |
| Comp. Ex. 2 | 0.75 | 10 | PC | + |

[Table 2]

| | Oxide | | | | | | | | Solvent | Gelling of slurry |
|---|---|---|---|---|---|---|---|---|---|---|
| | Degree of envelope | pH | $D_{10}$ (μm) | D50 (μm) | D90 (μm) | $D_{100}$ (μm) | Specific surface area ($m^2/g$) | Half-value width (°) | | |
| Ex. 3 | 0.93 | 7 | 3.6 | 5.8 | 9.0 | 13.0 | 0.4 | 0.26 | PC | - |
| Ex. 4 | 0.93 | 7 | 3.6 | 5.8 | 9.0 | 13.0 | 0.4 | 0.26 | DMC | - |
| Ex. 5 | 0.80 | 7 | 1.4 | 4.1 | 10.1 | 30.9 | 1.4 | 0.29 | PC | - |
| Ex. 6 | 0.80 | 7 | 1.4 | 4.1 | 10.1 | 30.9 | 1.4 | 0.29 | DMC | - |
| Comp. Ex. 3 | 0.75 | 10 | 0.5 | 2.4 | 5.8 | 13.0 | 1.6 | 0.31 | PC | + |
| Comp. Ex. 4 | 0.75 | 10 | 0.5 | 2.4 | 5.8 | 13.0 | 1.6 | 0.31 | DMC | + |
| Comp. Ex. 5 | 0.93 | 7 | 3.6 | 5.8 | 9.0 | 13.0 | 0.4 | 0.26 | NMP | + |

As is clear from Tables 1 and 2, no gelling occurred in the slurries of Examples 1 to 6, but gelling occurred in the slurries of Comparative Examples 1 to 5. In addition, the slurries of Comparative Examples 1 to 5 were browned.

The slurries of Examples 1 to 6 and Comparative Examples 1 to 4 each contained DMC or PC, which is an aprotic and protophobic, polar solvent. In comparison of the slurries of Examples 1 to 6 with Comparative Examples 1 to 4, each containing PC or DMC, no gelling occurred in the slurries of Examples 1 to 6 each containing an oxide (solid electrolyte) having a degree of envelope of 0.80 or more. In contrast, gelling was observed in the slurries of Comparative Examples 1 to 4 each containing an oxide having a degree of envelope of 0.75. Thus, discoloration and gelling of a slurry are conceived to be attributed to formation of polyene of vinylidene fluoride caused by elimination of HF. In the case of a slurry containing an oxide having a degree of envelope of 0.80 or greater, conceivably, interaction between slurry components was impeded, to thereby inhibit gelling.

In the slurries of Examples 1 to 6 each containing an oxide (solid electrolyte) and having a pH of 7, no gelling occurred. However, gelling occurred in the slurries of Comparative Examples 1 to 4 each containing an oxide. In the case of a slurry containing an oxide and a pH of 7, conceivably, interaction between slurry components was impeded, to thereby inhibit gelling.

In the slurries of Examples 3 to 6 each containing an oxide (solid electrolyte) having a $D_{10}$ of $\geq 1.4$ μm, no gelling occurred. However, gelling occurred in the slurries of Comparative Examples 3 and 4 each containing an oxide having a $D_{10}$ of 0.5 μm. Conceivably, the basicity of an oxide having a $D_{10}$ of $\geq 1.4$ μm was weakened, and interaction between slurry components was impeded, to thereby inhibit gelling.

In the slurries of Examples 3 to 6 each containing an oxide (solid electrolyte) having a specific surface area of 1.4 $m^2/g$ or less, no gelling occurred. However, gelling occurred in the slurries of Comparative Examples 3 and 4 each containing an oxide having a specific surface area of 1.6 $m^2/g$. Conceivably, the basicity of an oxide having a specific surface area of 1.4 $m^2/g$ or less was weakened, and interaction between slurry components was impeded, to thereby inhibit gelling.

In the slurries of Examples 3 to 6 each containing an oxide (solid electrolyte) having a half-value width less than 0.30°, no gelling occurred. However, gelling occurred in the slurries of Comparative Examples 3 and 4 each containing an oxide having a half-value width of 0.31°. Conceivably, the basicity of an oxide having a half-value width less than 0.30° was weakened, and interaction between slurry components was impeded, to thereby inhibit gelling.

The slurry of Comparative Example 5 contained NMP, which is a protophilic polar solvent. In comparison of Examples 3 and 4 with Comparative Example 5, no gelling was observed in the slurries of Examples 3 and 4 each containing an aprotic and protophobic, polar solvent (PC or DMC). In contrast, gelling was observed in the slurry of Comparative Example 5 containing a protophilic polar solvent (NMP). Conceivably, the basicity of an aprotic and protophobic, polar solvent was lower than that of a protophilic polar solvent, and interaction between slurry components was impeded, to thereby inhibit gelling.

Notably, if PVDF employed in the slurries of Examples 3 and 5 and Comparative Example 5 was changed to PVDF-HFP, the results equivalent to those observed in Examples 3 and 5 and Comparative Example 5 would be obtained. The assumption is clearly supported by the results obtained in Examples 1, 2, 4, and 6 and Comparative Examples 1 to 4.

The above Examples have revealed that an oxide (solid electrolyte) having a garnet-type structure which contains Li, La, and Zr and having a number average of the degrees of envelope of particles, having a particle size $D_{10}$ equal to or greater than 0.8 or greater, can suppress gelling of slurry. Also, the above Examples have revealed that an electrolyte composition which contains the above solid electrolyte; an ionic liquid containing an imidazolium cation; a

lithium salt; and a vinylidene fluoride polymer can also suppress gelling of slurry. Since an electrolyte sheet and a power storage device each containing the electrolyte composition can reduce variation in the dispersion state of components, variation in performance can be minimized.

The Examples have revealed that an oxide (solid electrolyte) having a garnet-type structure which contains Li, La, and Zr and exhibiting a hydrogen ion exponent of pH ≤8 in a supernatant of the mixture can suppress gelling of slurry. Also, the above Examples have revealed that the electrolyte composition which contains the above solid electrolyte; an ionic liquid containing an imidazolium cation; a lithium salt; and a vinylidene fluoride polymer can also suppress gelling of slurry. Since an electrolyte sheet and a power storage device each containing the electrolyte composition can reduce variation in the dispersion state of components, variation in performance can be minimized.

Also, an electrolyte composition including an oxide (solid electrolyte) having a garnet-type structure which contains Li, La, and Zr and a $D_{10}$ of 1.4 μm or greater; an ionic liquid including an imidazolium cation and a sulfonylimide anion; an electrolyte salt; a binder containing a vinylidene fluoride polymer; and an aprotic and protophobic, polar solvent was found to reduce gelling of slurry. Since an electrolyte sheet and a secondary battery each containing the electrolyte composition can reduce variation in the dispersion state of components, variation in performance can be minimized.

Also, an electrolyte composition including an oxide (solid electrolyte) having a garnet-type structure which contains Li, La, and Zr and a specific surface area, as determined through a gas adsorption method, of 1.4 $m^2/g$ or less; an ionic liquid including an imidazolium cation and a sulfonylimide anion; an electrolyte salt; a binder containing a vinylidene fluoride polymer; and an aprotic and protophobic, polar solvent was found to reduce gelling of slurry. Since an electrolyte sheet and a secondary battery each containing the electrolyte composition can reduce variation in the dispersion state of components, variation in performance can be minimized.

Also, an electrolyte composition including an oxide (solid electrolyte) having a garnet-type structure which contains Li, La, and Zr, and exhibiting an X-ray diffraction line in a 2θ range of 37.5° to 38.5° having a half-value width less than 0.30°; an ionic liquid including an imidazolium cation and a sulfonylimide anion; an electrolyte salt; a binder containing a vinylidene fluoride polymer; and an aprotic and protophobic, polar solvent was found to reduce gelling of slurry. Since an electrolyte sheet and a secondary battery each containing the electrolyte composition can reduce variation in the dispersion state of components, variation in performance can be minimized.

With reference to the above embodiment, the present invention has been described in detail. However, the present invention should not be limited to the aforementioned embodiment. Those skilled in the art can easily understand that the present invention may be modified in various manners, so long as such variations do not deviate from the scope of the invention as defined by the claims.

The power storage device 10 described in the above embodiment has a positive electrode layer 11 formed of a current-collecting layer 12 and a composite layer 13 provided on the layer 12, and a negative electrode layer 15 formed of a current-collecting layer 16 and a composite layer 17 provided on the layer 16. However, the configuration of the device is not necessarily limited thereto. Needless to say, in one possible mode, the components employed in the above embodiment may also be applied to a secondary battery having an electrode layer formed of a current-collecting layer 12, a composite layer 13 provided on one surface of the layer 12, and a composite layer 17 provided on the other surface of the layer 12 (i.e., a bipolar electrode). By alternatingly stacking the bipolar electrode and the electrolyte layer 14, and placing the thus-stacked body in a casing (not illustrated), a so-called secondary battery of a bipolar structure can be fabricated.

The above-described embodiment corresponds to a case in which each of the composite layers 13 and 17 and the electrolyte layer 14 contains an electrolyte composition. However, the invention is not necessarily limited to the embodiment. Alternatively, in the secondary battery, at least one member of the composite layers 13 and 17 and the electrolyte layer 14 may contain the electrolyte composition.

The above embodiment has been described, taking a lithium ion battery (secondary battery) containing an electrolyte composition as an example. Specifically, the power storage device 10 has the battery having electrode layers (the positive electrode layer 11 and the negative electrode layer 15) and the electrolyte layer 14. However, the invention is not necessarily limited to the embodiment. Other secondary batteries such as a lithium-sulfur battery, a lithium-oxygen battery, and a lithium-air battery also fall within the scope of the invention.

REFERENCE SIGNS LIST

10: power storage device
13: composite layer
14: electrolyte layer (electrolyte sheet)
17: composite layer
18: solid electrolyte

21: particle
22: contour
23: envelope
24: mixture
25: supernatant

## Claims

1. An electrolyte composition comprising a solid electrolyte, an ionic liquid containing an imidazolium cation, a lithium salt, and a polymer having $-CH_2CF_2-$,

   wherein the solid electrolyte has a garnet-type structure which contains Li, La, Zr, and O, in which, with respect to particles of the solid electrolyte having a particle size equal to or greater than the particle size at which the cumulative value of frequency in a volume-based particle size distribution reaches 10%, a number average of degrees of envelope of particles is 0.8 or greater, the degree of envelope being defined as a ratio, wherein the ratio is defined as area within a contour of a particle/area within an envelope of the particle,
   wherein the solid electrolyte further contains at least one element selected from the group consisting of Mg, Al, Si, Ca, Ti, V, Ga, Sr, Y, Nb, Sn, Sb, Ba, Hf, Ta, W, Bi, Rb, and lanthanoid, except for La, and
   wherein the electrolyte composition has a lithium ion conductivity of $4.0 \times 10^{-5}$ S/cm or higher at 25°C,
   and wherein the cumulative value of frequency in a volume-based particle size distribution and the number average of degrees of envelope of particles are determined as described in the specification.

2. The electrolyte composition according to claim 1, wherein a mixture composed of N-methylpyrrolidone and the solid electrolyte has a solid electrolyte content of 24.5 wt%, and,
   a liquid obtained by 10-fold diluting a supernatant with pure water has a hydrogen ion exponent (pH) of 8 or lower.

3. An electrolyte sheet formed of the electrolyte composition as recited in claim 1 or 2.

4. A power storage device having an electrolyte layer formed of the electrolyte composition as recited in claim 1 or 2.

## Patentansprüche

1. Elektrolytzusammensetzung, umfassend einen Festelektrolyten, eine ionische Flüssigkeit, enthaltend ein Imidazoliumkation, ein Lithiumsalz und ein Polymer mit $-CH_2CF_2-$,

   wobei der Festelektrolyt eine Granatstruktur aufweist, die Li, La, Zr und O enthält, in der, in Bezug auf Partikel des Festelektrolyten mit einer Partikelgröße, die gleich oder größer als die Partikelgröße ist, bei der der kumulative Wert der Häufigkeit in einer volumenbasierten Partikelgrößenverteilung 10 % erreicht, ein Zahlenmittel der Hüllgrade an Partikeln 0,8 oder größer ist, wobei der Hüllgrad als Verhältnis definiert ist, wobei das Verhältnis als Fläche innerhalb einer Kontur eines Partikels/Fläche innerhalb einer Hülle des Partikels definiert ist,
   wobei der Festelektrolyt weiter mindestens ein Element enthält, das aus der Gruppe ausgewählt ist, bestehend aus Mg, Al, Si, Ca, Ti, V, Ga, Sr, Y, Nb, Sn, Sb, Ba, Hf, Ta, W, Bi, Rb und Lanthanoiden, mit Ausnahme von La, und
   wobei die Elektrolytzusammensetzung eine Lithiumionenleitfähigkeit von $4{,}0 \times 10^{-5}$ S/cm oder höher bei 25 °C aufweist,
   und wobei der kumulative Wert der Häufigkeit in einer volumenbasierten Partikelgrößenverteilung und das Zahlenmittel der Hüllgrade an Partikeln wie in der Beschreibung angegeben bestimmt werden.

2. Die Elektrolytzusammensetzung gemäß Anspruch 1, wobei eine Mischung, zusammengesetzt aus N-Methylpyrrolidon und dem Festelektrolyten, einen Festelektrolytgehalt von 24,5 Gew.-% aufweist, und
   eine Flüssigkeit, erhalten durch 10-fache Verdünnung eines Überstands mit reinem Wasser, einen Wasserstoffionenexponenten (pH-Wert) von 8 oder weniger aufweist.

3. Elektrolytfolie, gebildet aus der Elektrolytzusammensetzung gemäß Anspruch 1 oder 2.

4. Energiespeichervorrichtung mit einer Elektrolytschicht, gebildet aus der Elektrolytzusammensetzung gemäß Anspruch 1 oder 2.

## Revendications

1. Composition électrolytique comprenant un électrolyte solide, un liquide ionique contenant un cation imidazolium, un sel de lithium, et un polymère ayant $-CH_2CF_2-$, dans laquelle l'électrolyte solide a une structure de type grenat qui contient Li, La, Zr et O, dans laquelle, s'agissant des particules de l'électrolyte solide ayant une taille de particule égale ou supérieure à la taille de particule à laquelle la valeur cumulée de fréquence dans une distribution de taille de particule basée sur le volume atteint 10 %, une moyenne en nombre des degrés d'enveloppe de particules est de 0,8 ou plus, le degré d'enveloppe étant défini comme un rapport, dans laquelle le rapport est défini comme une aire à l'intérieur d'un contour d'une particule/aire à l'intérieur d'une enveloppe de la particule,

    dans laquelle l'électrolyte solide contient en outre au moins un élément sélectionné dans le groupe consistant en Mg, Al, Si, Ca, Ti, V, Ga, Sr, Y, Nb, Sn, Sb, Ba, Hf, Ta, W, Bi, Rb, et lanthanoïde, à l'exception de La, et
    dans laquelle la composition électrolytique présente une conductivité d'ions lithium de $4{,}0 \times 10^{-5}$ S/cm ou plus à 25 °C,
    et dans laquelle la valeur cumulée de fréquence dans une distribution de taille de particule basée sur le volume et la moyenne en nombre de degrés d'enveloppe de particules sont déterminées comme décrit dans la description.

2. Composition électrolytique selon la revendication 1, dans laquelle un mélange composé de N-méthylpyrrolidone et de l'électrolyte solide présente une teneur en électrolyte solide de 24,5 % en poids, et,
    un liquide obtenu par dilution 10 fois d'un surnageant avec de l'eau pure présente un potentiel hydrogène (pH) de 8 ou moins.

3. Feuille d'électrolyte formée de la composition électrolytique selon la revendication 1 ou 2.

4. Dispositif de stockage d'énergie ayant une couche d'électrolyte formée de la composition électrolytique selon la revendication 1 ou 2.

FIG. 1

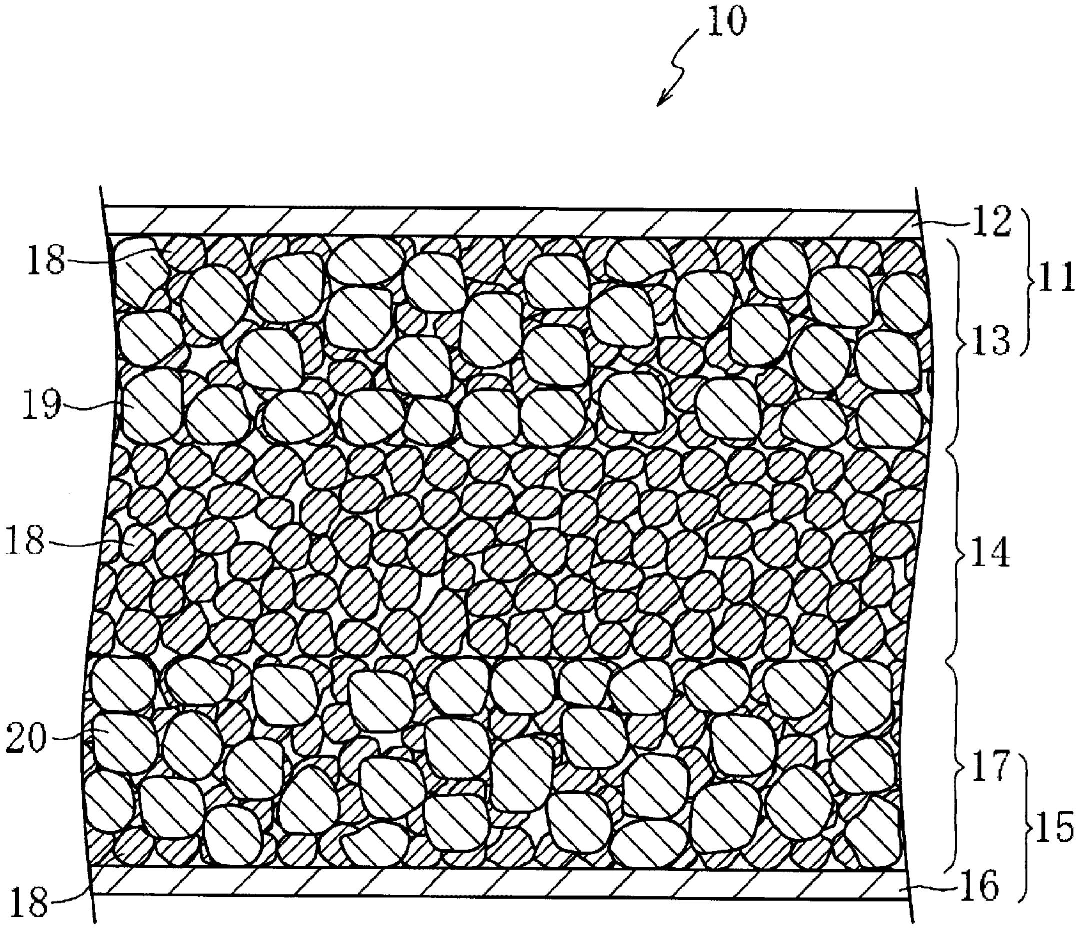

FIG. 2

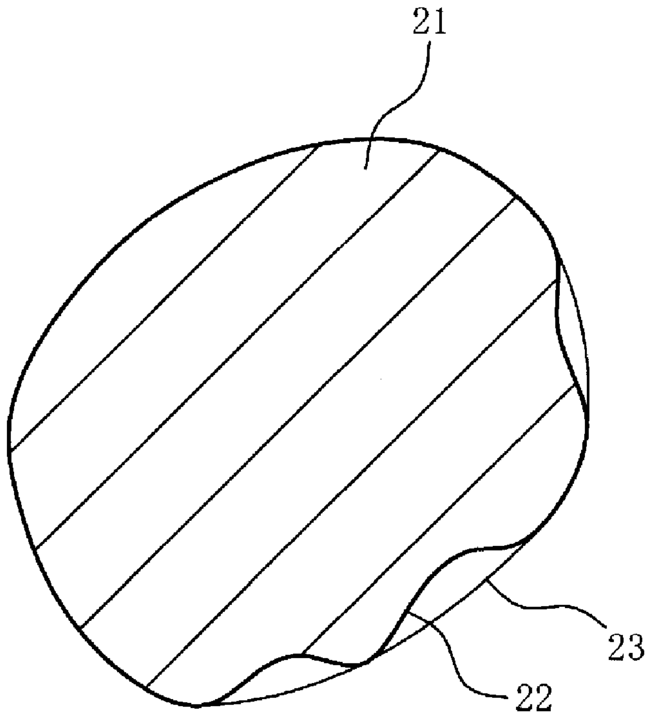

FIG. 3

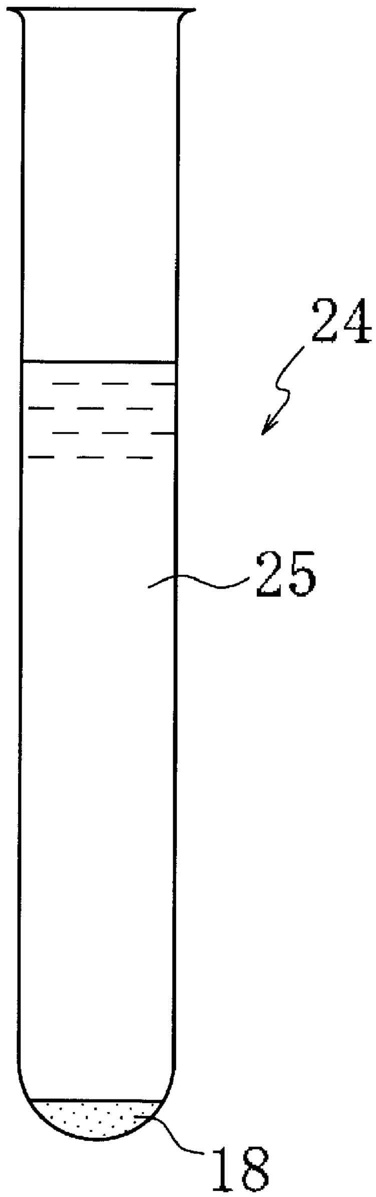

FIG. 4

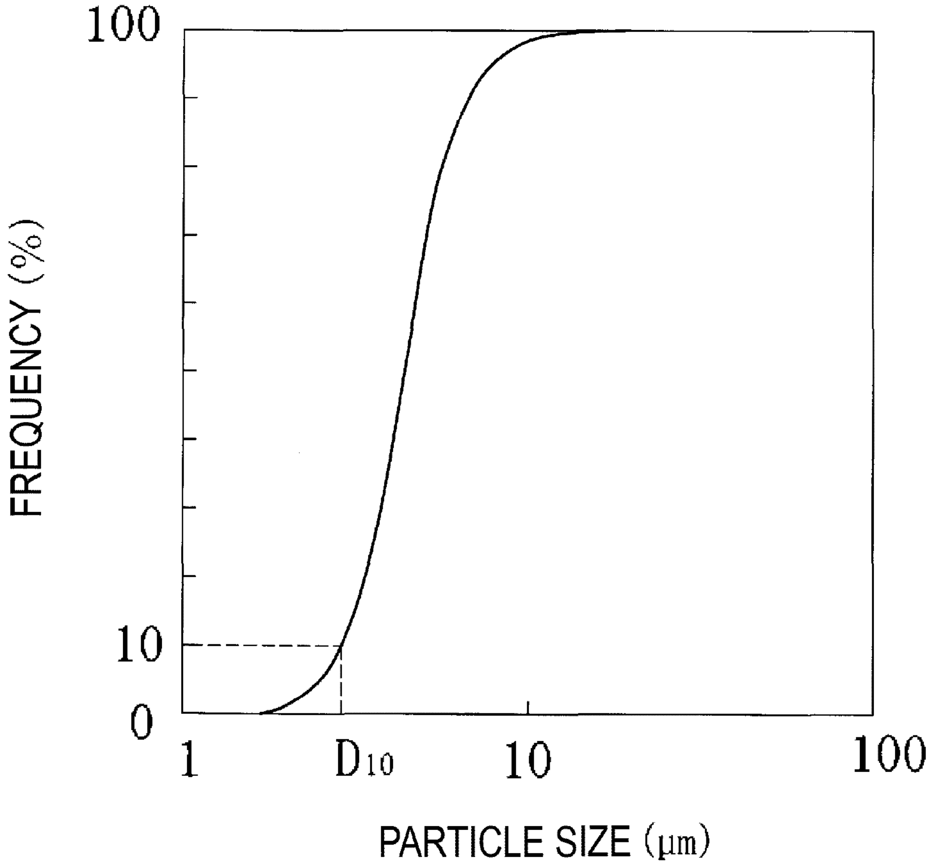

FIG. 5

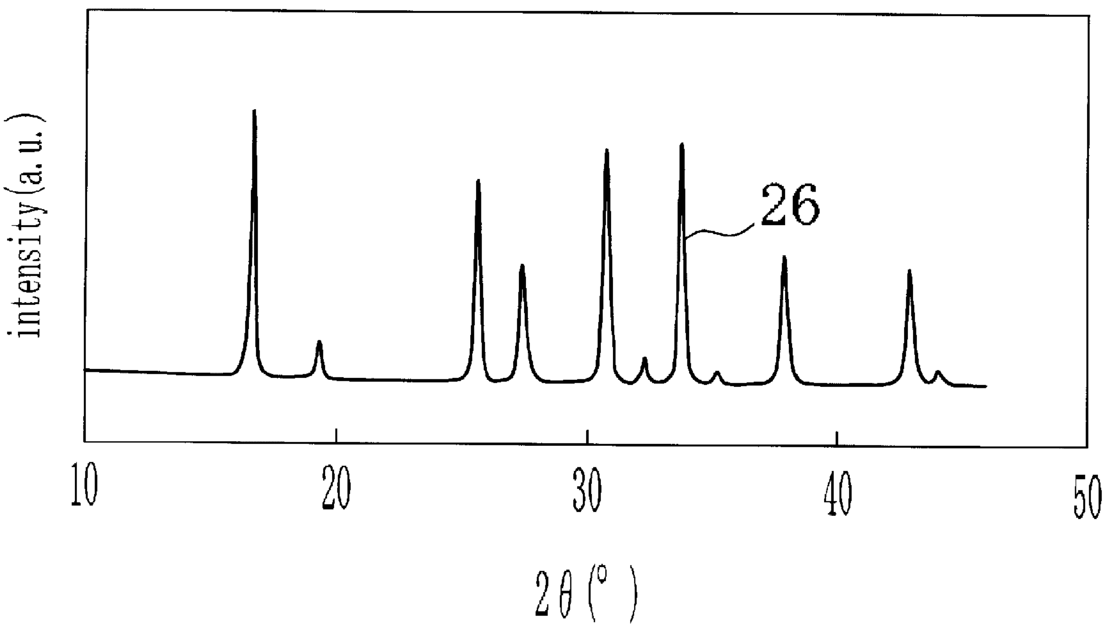
intensity(a.u.)
26
10
20
30
40
50
2θ(° )

FIG. 6

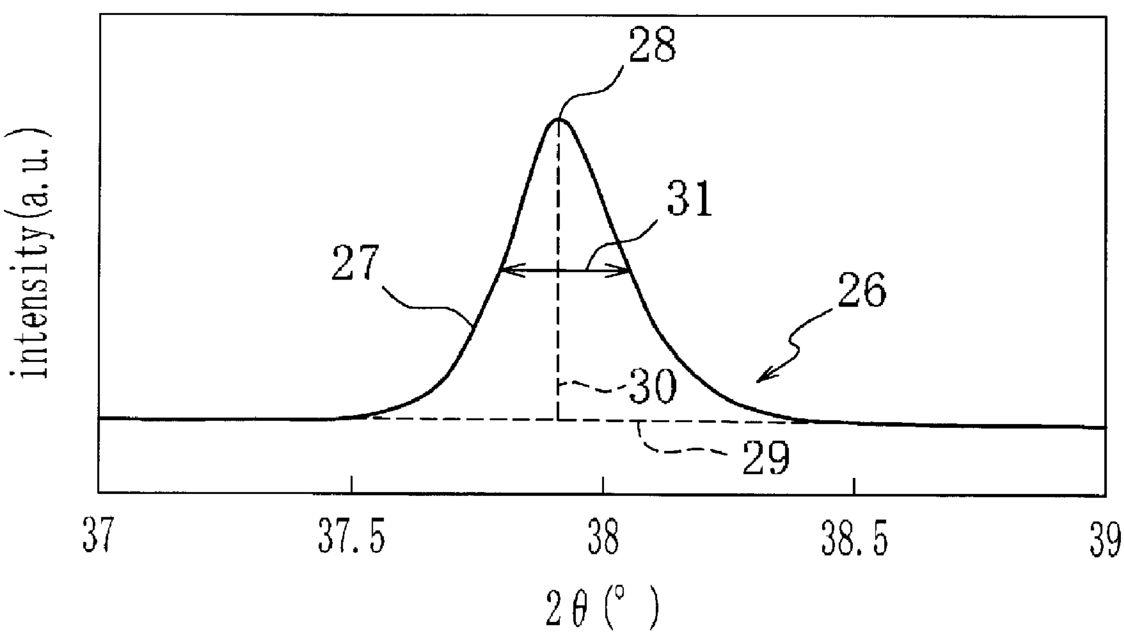
intensity(a.u.)
28
31
27
26
30
29
37
37.5
38
38.5
39
2θ(° )

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016035913 A
- JP 2018056427 A
- JP 6682709 B

### Non-patent literature cited in the description

- **I.M. KOLTHOFF**. *Anal. Chem.*, 1974, vol. 46, 1992